# EUROPEAN PATENT APPLICATION

(11) **EP 2 741 581 A2**
(43) Date of publication of application: **11.06.2014**
(21) Application number: 13182244.7
(22) Date of filing: 29.08.2013
(51) Int. Cl.: H05B 33/08

(54) **Power supply circuit and luminaire**

(30) Priority: 07.12.2012 JP 2012268838
(71) Applicant: Toshiba Lighting & Technology Corporation, Yokosuka-shi Kanagawa 237-8510 (JP)
(72) Inventor: Kato, Go, Kanagawa, 237-8510 (JP); Otake, Hirokazu, Kanagawa, 237-8510 (JP); Kitamura, Noriyuki, Kanagawa, 237-8510 (JP); Nakamura, Hiroto, Kanagawa, 237-8510 (JP)
(74) Representative: Bokinge, Ole

(57) **Abstract**

According to an embodiment, there is provided a power supply circuit (14) including a power converting unit (20), a current adjusting unit (23), and a control unit (21) and a luminaire (10) including the power supply circuit (14). The power converting unit (20) converts an alternating-current voltage into a direct-current voltage and supplies the direct-current voltage to the load (12). The alternating-current voltage is subjected to conduction angle control and is supplied via a power supply path (25). The current adjusting unit (23) includes a branch path (24) electrically connected to the power supply path (25) and can switch a first path state and a second path state. The first path state feeds a part of an electric current flowing through the power supply path (25) to the branch path (24). An electric current flowing to the branch path (24) in the second path state is smaller than the electric current in the first path state. The control unit (21) detects a conduction angle of the alternating-current voltage, controls the conversion of the direct-current voltage by the power converting unit (20) according to the detected conduction angle, and controls the current adjusting unit (23) according to the detected conduction angle.

## Description

### FIELD

Embodiments described herein relate generally to a power supply circuit and a luminaire.

### BACKGROUND

There is a power supply circuit that converts an alternating-current voltage subjected to conduction angle control into a predetermined voltage and supplies the voltage to a load. The power supply circuit detects a conduction angle of an alternating-current voltage and converts the voltage according to the detected conduction angle. Such a power supply circuit is used for a luminaire equipped with a lighting load including an illumination light source such as a light-emitting diode (LED). For example, the power supply circuit for the luminaire performs conversion of a voltage in synchronization with conduction angle control of a dimmer to thereby perform dimming of the illumination light source. In such a power supply circuit, it is desired to more surely detect the conduction angle.

### BRIEF DESCRIPTION OF THE DRAWINGS

FIG. 1 is a block diagram schematically showing a luminaire according to an embodiment;
FIG. 2 is a circuit diagram schematically showing a power supply circuit according to the embodiment;
FIGS. 3A and 3B are graphs representing the operation of a control unit according to the embodiment;
FIGS. 4A and 4B are graphs representing the operation of the control unit;
FIGS. 5A to 5C are graphs representing the operation of the control unit; and
FIGS. 6A to 6C are graphs representing another operation of the control unit according to the embodiment.

### DETAILED DESCRIPTION

According to an embodiment, there is provided a power supply circuit including a power converting unit, a current adjusting unit, and a control unit. The power converting unit is configured to convert an alternating-current voltage into a direct-current voltage and supply the direct-current voltage to a load. The alternating-current voltage is subjected to conduction angle control and is supplied via a power supply path. The current adjusting unit includes a branch path electrically connected to the power supply path and can switch a first path state and a second path state. The first path state feeds a part of an electric current flowing through the power supply path to the branch path. An electric current flowing to the branch path in the second path state is smaller than the electric current in the first path state. The control unit detects a conduction angle of the alternating-current voltage, controls the conversion of the direct-current voltage by the power converting unit according to the detected conduction angle, and controls the current adjusting unit according to the detected conduction angle.

According to another embodiment, there is provided a luminaire including a lighting load, and a power supply circuit. The lighting load includes an illumination light source. The power supply circuit includes a power converting unit, a current adjusting unit, and a control unit. The power converting unit is configured to convert an alternating-current voltage into a direct-current voltage and supply the direct-current voltage to the lighting load. The alternating-current voltage is subjected to conduction angle control and is supplied via a power supply path. The current adjusting unit includes a branch path electrically connected to the power supply path and can switch a first path state and a second path state. The first path state feeds a part of an electric current flowing through the power supply path to the branch path. An electric current flowing to the branch path in the second path state is smaller than the electric current in the first path state. The control unit detects a conduction angle of the alternating-current voltage, controls the conversion of the direct-current voltage by the power converting unit according to the detected conduction angle, and controls the current adjusting unit according to the detected conduction angle.

An embodiment is explained below with reference to the drawings.

Note that the drawings are schematic or conceptual and relations between thicknesses and widths of sections, ratios of sizes among the sections, and the like are not always the same as actual ones. Even when the same sections are shown, the dimensions and the ratios of the sections are sometimes shown different depending on the drawings.

Note that, in this specification and the figures, components same as components described with reference to the figures already referred to are denoted by the same reference numerals and signs and detailed explanation of the components is omitted as appropriate.

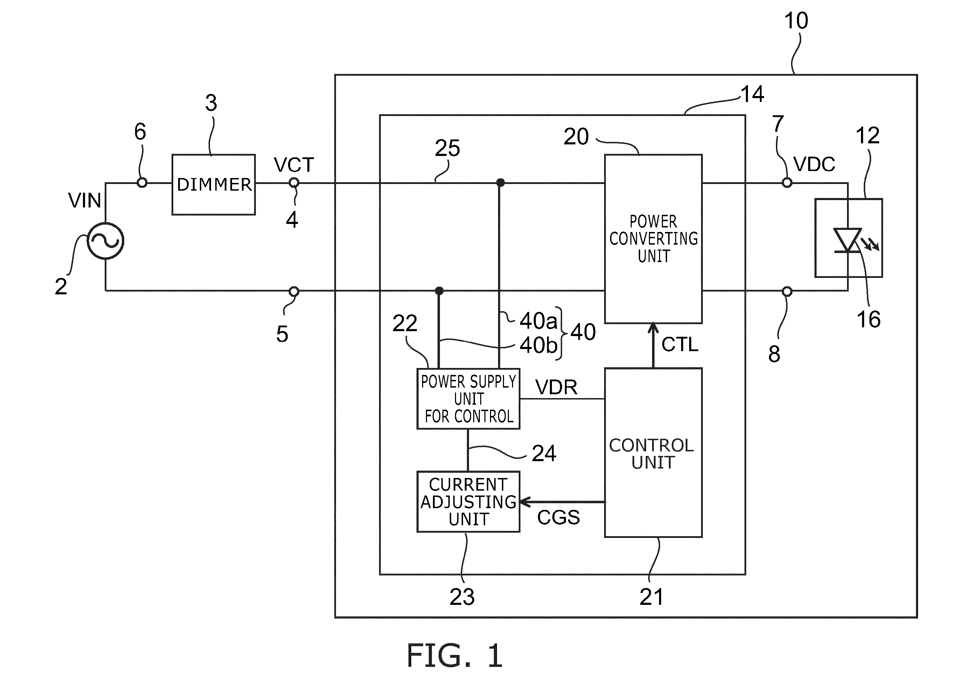

FIG. 1 is a block diagram schematically showing a luminaire according to an embodiment.

As shown in FIG. 1, a luminaire 10 includes a lighting load 12 (a load) and a power supply circuit 14. The lighting load 12 includes an illumination light source 16 such as a light-emitting diode (LED). The power supply circuit 14 is connected to an alternating-current power supply 2 and a dimmer 3. In this specification, the "connection" means electrical connection and includes non-physical connection and connection via other components.

The alternating-current power supply 2 is, for example, a commercial power supply. The dimmer 3 generates an alternating-current voltage VCT subjected to conduction angle control from a power supply voltage VIN of the alternating-current power supply 2. The power supply circuit 14 converts the alternating-current voltage VCT supplied from the dimmer 3 into a direct-current voltage VDC and outputs the direct-current voltage VDC to the lighting load 12 to thereby light the illumination light source 16. The power supply circuit 14 performs dimming of the illumination light source 16 in synchronization with the alternating-current voltage VCT subjected to the conduction angle control.

As the conduction angle control of the dimmer 3, there are, for example, a system of phase control (a leading edge) for controlling a phase that conducts in a period from a zero-cross of an alternating-current voltage to a maximum of an absolute value of the alternating-current voltage and a system of antiphase control (a trailing edge) for controlling a phase that is interrupted in a period from the maximum of the absolute value of the alternating-current voltage to the zero-cross of the alternating-current voltage.

The dimmer 3 that performs the phase control has a simple circuit configuration and can treat a relatively large power load. However, when a triac is used, a light load operation is difficult. If a so-called power supply dip in which a power supply voltage temporarily drops occurs, the dimmer 3 tends to fall into an unstable operation. Further, the dimmer 3 has a characteristic that, for example, affinity with a capacitive load is poor because a rush current occurs when the capacitive load is connected thereto.

On the other hand, the dimmer 3 that performs the antiphase control can operate even with a light load. A rush current does not occur even if a capacitive load is connected thereto. The operation of the dimmer 3 is stable even if a power supply dip occurs. However, a circuit configuration of the dimmer 3 is complicated and temperature tends to rise. Therefore, the dimmer 3 is not suitable for a heavy load. Further, the dimmer 3 has a characteristic that, for example, a surge occurs when an inductive load is connected thereto.

In this embodiment, as the configuration of the dimmer 3, a configuration in which the dimmer 3 is inserted in series between terminals 4 and 6 of one of a pair of power supply lines for supplying the power supply voltage VIN is illustrated. However, other configurations may be adopted.

The power supply circuit 14 includes a power converting unit 20, a control unit 21, a power supply unit for control 22, and a current adjusting unit 23. The power converting unit 20 converts the alternating-current voltage VCT supplied via a power supply path 25 into the direct-current voltage VDC having a predetermined voltage value corresponding to the lighting load 12 and supplies the direct-current voltage VDC to the lighting load 12.

The power supply unit for control 22 includes a wiring section 40 connected to the power supply path 25. The wiring section 40 includes a wire 40a connected to an input terminal 4 and a wire 40b connected to an input terminal 5. The power supply unit for control 22 converts the alternating-current voltage VCT input via the wiring section 40 into a direct-current driving voltage VDR corresponding to the control unit 21 and supplies the driving voltage VDR to the control unit 21.

The current adjusting unit 23 includes a branch path 24 electrically connected to the power supply path 25 and can switch a first path state in which a part of an electric current flowing through the power supply path 25 is fed to the branch path 24 and a second path state in which a part of the electric current is not fed to the branch path 24. Consequently, for example, the current adjusting unit 23 adjusts an electric current flowing to the power supply path 25. In this example, the branch path 24 of the current adjusting unit 23 is connected to the power supply path 25 via the power supply unit for control 22. The branch path 24 may be directly connected to the power supply path 25 not via the power supply unit for control 22. Note that the second path state includes a state in which a feeble electric current not affecting an operation flows to a second branch path 60. The second path state is, for example, a state in which an electric current flowing to the second branch path 60 is smaller than the electric current in the first path state. The first path state is, for example, a conduction state and the second path state is, for example, a non-conduction state.

The control unit 21 detects a conduction angle of the alternating-current voltage VCT. The control unit 21 generates a control signal CTL corresponding to the detected conduction angle and inputs the control signal CTL to the power converting unit 20. The power converting unit 20 generates the direct-current voltage VDC having a voltage value corresponding to the input control signal CTL. That is, the control unit 21 controls the conversion into the direct-current voltage VDC by the power converting unit 20. The control unit 21 generates a control signal CGS according to the detected conduction angle and inputs the control signal CGS to the current adjusting unit 23 to thereby control the switching of the first path state and the second path state of the current adjusting unit 23. In this way, the control unit 21 controls the power converting unit 20 and the current adjusting unit 23 according to the detected conduction angle to thereby dim the illumination light source 16 in synchronization with the conduction angle control for the dimmer 3. For example, a microprocessor is used for the control unit 21.

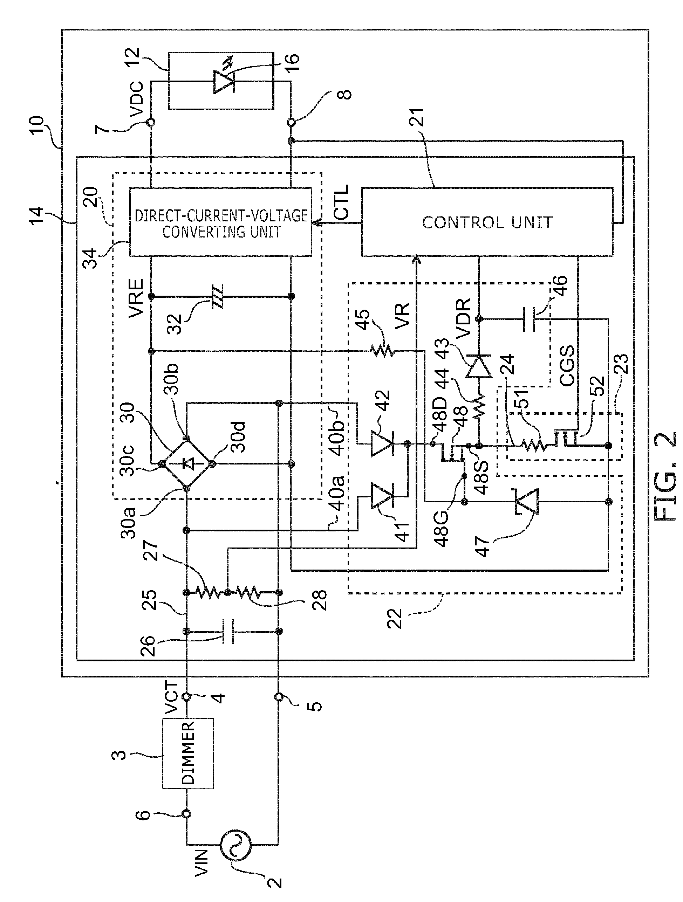

FIG. 2 is a circuit diagram schematically showing the power supply circuit according to the embodiment.

As shown in FIG. 2, the power converting unit 20 includes a rectifying circuit 30, a smoothing capacitor 32, and a direct-current-voltage converting unit 34.

The rectifying circuit 30 is configured by, for example, a diode bridge. Input terminals 30a and 30b of the rectifying circuit 30 are connected to a pair of input terminals 4 and 5. The alternating-current voltage VCT subjected to the phase control or the antiphase control via the dimmer 3 is input to the input terminals 30a and 30b of the rectifying circuit 30. For example, the rectifying circuit 30 full-wave rectifies the alternating-current voltage VCT and causes a pulsating flow voltage after the full-wave rectification between a high-potential terminal 30c and a low-potential terminal 30d.

The smoothing capacitor 32 is connected between the high-potential terminal 30c and the low-potential terminal 30d of the rectifying circuit 30. The smoothing capacitor 32 smoothes the pulsating flow voltage rectified by the rectifying circuit 30. Consequently, a direct-current voltage VRE (a first direct-current voltage) appears at both ends of the smoothing capacitor 32.

The direct-current voltage converting unit 34 is connected to both the ends of the smoothing capacitor 32. Consequently, the direct-current voltage VRE is input to the direct-current-voltage converting unit 34. The direct-current voltage converting unit 34 converts the direct-current voltage VRE into a direct-current voltage VDC (a second direct-current voltage) having a different voltage value and outputs the direct-current voltage VDC to output terminals 7 and 8 of the power supply circuit 14. The lighting load 12 is connected to the output terminals 7 and 8. The lighting load 12 lights the illumination light source 16 with the direct-current voltage VDC supplied from the power supply circuit 14.

The direct-current-voltage converting unit 34 is connected to the control unit 21. The control unit 21 inputs the control signal CTL to the direct-current-voltage converting unit 34. For example, the direct-current-voltage converting unit 34 steps down the direct-current voltage VRE according to the control signal CTL. Consequently, the direct-current-voltage converting unit 34 converts the direct-current voltage VRE into the direct-current voltage VDC corresponding to the specifications of the lighting load 12 and a dimming degree of the dimmer 3.

The direct-current-voltage converting unit 34 includes a switching element such as an FET. The direct-current-voltage converting unit 34 turns on and off the switching element to thereby step down the direct-current voltage VRE. For example, the control unit 21 inputs a duty signal for specifying timing for turning on and off the switching element to the direct-current-voltage converting unit 34 as the control signal CTL. Consequently, it is possible to adjust a voltage value of the direct-current voltage VDC to a value corresponding to a duty ratio of the control signal CTL. The direct-current voltage converting unit 34 is, for example, a falling voltage type DC-DC converter.

The power supply circuit 14 further includes a filter capacitor 26 and resistors 27 and 28. The filter capacitor 26 is connected between the input terminals 4 and 5. That is, the filter capacitor 26 is connected to the power supply path 25. For example, the filter capacitor 26 removes noise included in the alternating-current voltage VCT.

The resistors 27 and 28 are connected in series between the input terminals 4 and 5. A connection point of the resistors 27 and 28 is connected to the control unit 21. Consequently, a voltage corresponding to a voltage dividing ratio of the resistors 27 and 28 is input to the control unit 21 as a detection voltage VR for detecting an absolute value of the alternating-current voltage VCT.

The power supply unit for control 22 includes rectifying elements 41 to 43, resistors 44 and 45, a capacitor 46, a Zener diode 47, and a semiconductor device 48.

The rectifying elements 41 and 42 are, for example, diodes. An anode of the rectifying element 41 is connected to one input terminal 30a of the rectifying circuit 30 via the wire 40a. An anode of the rectifying element 42 is connected to the other input terminal 30b of the rectifying circuit 30 via the wire 40b.

As the semiconductor device 48, for example, an FET, a GaN-HEMT, or the like is used. In the following explanation, it is assumed that the semiconductor device 48 is an FET. In this example, the semiconductor device 48 is an enhancement type n-channel FET. The semiconductor device 48 includes a source electrode 48S (a first main electrode), a drain electrode 48D (a second main electrode), and a gate electrode 48G (a control electrode). The potential of the drain electrode 48D is set higher than the potential of the source electrode 48S. The gate electrode 48G is used to switch a first state in which an electric current flows between the source electrode 48S and the drain electrodes 48D and a second state in which the electric current flowing between the source electrode 48S and the drain electrode 48D is smaller than the electric current in the first state. In the second state, an electric current does not substantially flow between the source electrode 48S and the drain electrode 48D. The semiconductor device 48 may be a p-channel type or a depression type. For example, when the semiconductor device 48 is the p-channel type, the drain electrode 48D is the first main electrode and the source electrode 48S is the second main electrode. That is, in the case of the p-channel type, the potential of the source electrode 48S is set higher than the potential of the drain electrode 48D.

The drain electrode 48D of the semiconductor device 48 is connected to a cathode of the rectifying element 41 and a cathode of the rectifying element 42. That is, the drain electrode 48D of the semiconductor device 48 is connected to the power supply path 25 via the rectifying elements 41 and 42. The source electrode 48S of the semiconductor device 48 is connected to one end of the resistor 44. The gate electrode 48G of the semiconductor device 48 is connected to a cathode of the Zener diode 47. The gate electrode 48G of the semiconductor device 48 is connected to the high-potential terminal 30c, which is an output terminal on a high-potential side of the rectifying circuit 30, via the resistor 45.

The other end of the resistor 44 is connected to an anode of the rectifying element 43. A cathode of the rectifying element 43 is connected to the control unit 21 and one end of the capacitor 46.

An electric current having one polarity involved in the application of the alternating-current voltage VCT flows to the drain electrode 48D of the semiconductor device 48 via the rectifying element 41. On the other hand, an electric current having the other polarity involved in the application of the alternating-current voltage VCT flows to the drain electrode 48D of the semiconductor device 48 via the rectifying element 42. Consequently, a pulsating flow voltage obtained by full-wave rectifying the alternating-current voltage VCT is applied to the drain electrode 48D of the semiconductor device 48.

The direct-current voltage VRE smoothed by the smoothing capacitor 32 is applied to the cathode of the Zener diode 47 via the resistor 45. Consequently, a substantially constant voltage corresponding to a breakdown voltage of the Zener diode 47 is applied to the gate electrode 48G of the semiconductor device 48. According to the application of the voltage, a substantially constant electric current flows to between a drain and a source of the semiconductor device 48. In this way, the semiconductor device 48 functions as a constant current element. The semiconductor device 48 adjusts an electric current flowing to the wiring section 40.

The capacitor 46 smoothes the pulsating flow voltage supplied from the source electrode 48S of the semiconductor device 48 via the resistor 44 and the rectifying element 43. Consequently, the direct-current driving voltage VDR is generated. The generated driving voltage VDR is supplied to the control unit 21.

In this case, as explained above, the drain electrode 48D of the semiconductor device 48 is connected to the power supply path 25 and the gate electrode 48G of the semiconductor device 48 is connected to the high-potential terminal 30c of the rectifying circuit 30. That is, the alternating-current voltage VCT is applied to the drain electrode 48D of the semiconductor device 48 and the direct-current voltage VRE is applied to the gate electrode 48G of the semiconductor device 48. Consequently, for example, it is possible to stabilize the operation of the semiconductor device 48, suppress a load applied to the rectifying elements 41 and 42, and supply the stable driving voltage VDR to the control unit 21. As a result, it is possible to stabilize the operation of the control unit 21. A voltage applied to the drain electrode 48D of the semiconductor device 48 only has to be a voltage not smoothed by the smoothing capacitor 32. For example, the voltage may be a pulsating flow voltage after the rectification by the rectifying circuit 30. A voltage applied to the gate electrode 48G of the semiconductor device 48 only has to be a voltage smoothed by the smoothing capacitor 32. For example, the voltage may be the direct-current voltage VDC.

The current adjusting unit 23 includes a resistor 51 and a switching element 52. As the switching element 52, for example, an FET or a GaN-HEMT is used. In the following explanation, it is assumed that the switching element 52 is an FET.

One end of the resistor 51 is connected to the source electrode 48S of the semiconductor device 48. The other end of the resistor 51 is connected to a drain of the switching element 52. A gate of the switching element 52 is connected to the control unit 21. The control unit 21 inputs the control signal CGS to the gate of the switching element 52. As the switching element 52, for example, a switching element of a normally off type is used. For example, when the control signal CGS input from the control unit 21 is switched from Lo to Hi, the switching element 52 changes from an OFF state to an ON state.

When the switching element 52 is changed to the ON state, for example, a part of an electric current flowing through the power supply path 25 flows to the branch path 24 via the rectifying elements 41 and 42 and the semiconductor device 48. That is, when the switching element 52 is changed to the ON state, the current adjusting unit 23 changes to the first path state. When the switching element 52 is changed to the OFF state, the current adjusting unit 23 changes to the second path state.

A source of the switching element 52, an anode of the Zener diode 47, and the other end of the capacitor 46 are connected to the low-potential terminal 30d of the rectifying circuit 30. That is, a ground of the power supply unit for control 22 and a ground of the current adjusting unit 23 are provided in common with a ground on an input side of the direct-current-voltage converting unit 34. A ground of the control unit 21 is connected to the output terminal 8. That is, the ground of the control unit 21 is provided in common with a ground on an output side of the direct-current-voltage converting unit 34. Consequently, for example, it is possible to further stabilize the operation of the control unit 21.

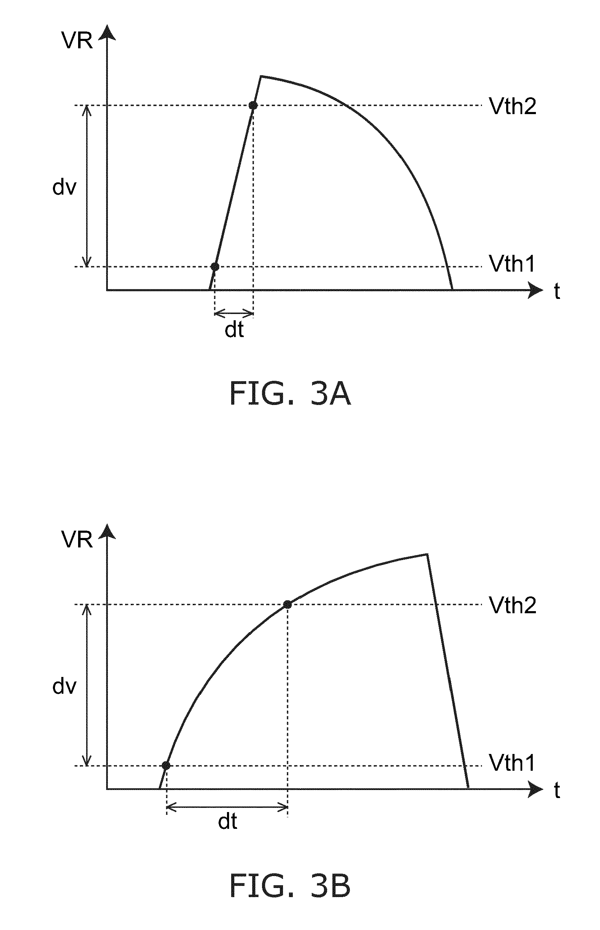

FIGS. 3A and 3B are graphs representing the operation of the control unit according to the embodiment.

After starting according to the supply of the driving voltage VDR from the power supply unit for control 22, the control unit 21 determines a control system of the dimmer 3 on the basis of the detection voltage VR.

The abscissa of FIGS. 3A and 3B indicates time t and the ordinate indicates the detection voltage VR.

FIG. 3A represents an example of a waveform of the detection voltage VR obtained when the alternating-current voltage VCT is supplied from the dimmer 3 of the phase control system.

FIG. 3B represents an example of a waveform of the detection voltage VR obtained when the alternating-current voltage VCT is supplied from the dimmer 3 of the antiphase control system.

As shown in FIGS. 3A and 3B, the control unit 21 sets a first threshold voltage Vth1 and a second threshold voltage Vth2 with respect to the detection voltage VR. An absolute value of the second threshold voltage Vth2 is larger than an absolute value of the first threshold voltage Vth1. The control unit 21 measures time dt from the time when the detection voltage VR reaches the first threshold voltage Vth1 until the detection voltage VR reaches the second threshold voltage Vth2. The control unit 21 calculates a gradient dV/dt from a difference dV between the first threshold voltage Vth1 and the second threshold voltage Vth2 and the time dt. The control unit 21 determines whether the gradient dV/dt is equal to or larger than a predetermined value. When the gradient dV/dt is equal to or larger than the predetermined value, the control unit 21 determines that the control system of the dimmer 3 is the phase control system. When the gradient dV/dt is smaller than the predetermined value, the control unit 21 determines that the control system of the dimmer 3 is the antiphase control system. For example, the measurement of the time dt may be performed using an internal clock or may be performed by providing a timer or the like on the outside.

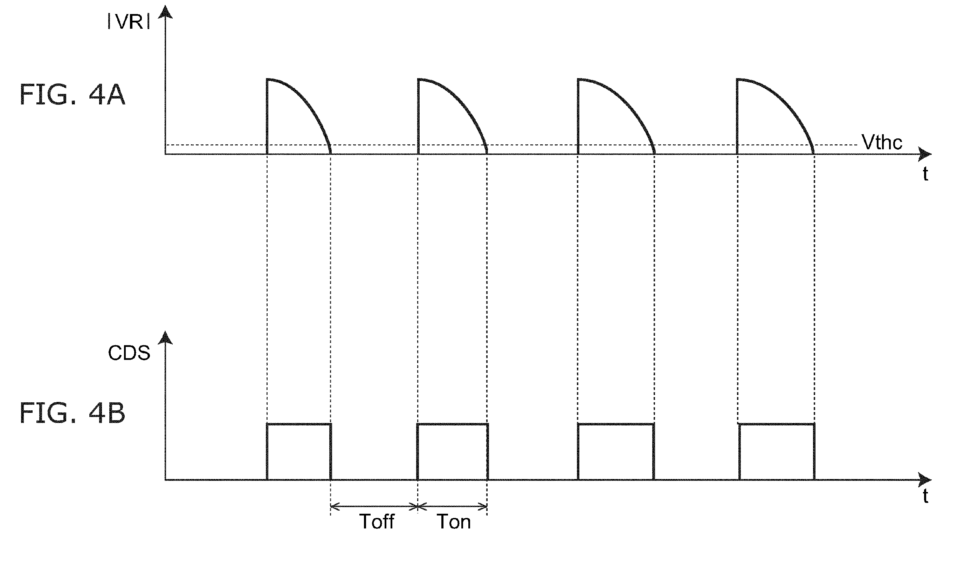

FIGS. 4A and 4B are graphs representing the operation of the control unit according to the embodiment. The control unit 21 detects a conduction angle of the alternating-current voltage VCT after determining the control system of the dimmer 3.

FIGS. 4A and 4B represent an operation example performed when the control system of the dimmer 3 is the phase control system.

The abscissa of FIGS. 4A and 4B indicates time t. The ordinate of FIG. 4A indicates an absolute value of the detection voltage VR. The ordinate of FIG. 4B indicates a conduction angle detection signal CDS.

As shown in FIGS. 4A and 4B, the control unit 21 determines whether an absolute value of the detection voltage VR is equal to or larger than a threshold voltage Vthc. When the absolute value of the detection voltage VR is equal to or larger than the threshold voltage Vthc, the control unit 21 sets the conduction angle detection signal CDS to Hi. When the absolute value of the detection voltage VR is smaller than the threshold voltage Vthc, the control unit 21 sets the conduction angle detection signal CDS to Lo.

The control unit 21 determines that a section of time Ton in which the conduction angle detection signal CDS is set to Hi is a conduction interval of the conduction angle control of the dimmer 3. The control unit 21 determines that a section of time Toff in which the conduction angle detection signal CDS is set to Lo is an interruption interval of the conduction angle control of the dimmer 3. Consequently, the control unit 21 detects a conduction angle of the alternating-current voltage VCT from a ratio of the time Ton and the time Toff.

After detecting the conduction angle of the alternating-current voltage VCT, the control unit 21 generates the control signal CTL of a duty ratio corresponding to the conduction angle and inputs the generated control signal CTL to the direct-current-voltage converting unit 34. Consequently, the illumination light source 16 is dimmed according to the alternating-current voltage VCT, the conduction angle of which is controlled by the phase control system. For example, the control unit 21 periodically carries out the detection of a conduction angle until the supply of the alternating-current voltage VCT is stopped. The detection of a conduction angle may be performed every time at every half wave of the alternating-current voltage VCT or may be performed at every predetermined number of half waves.

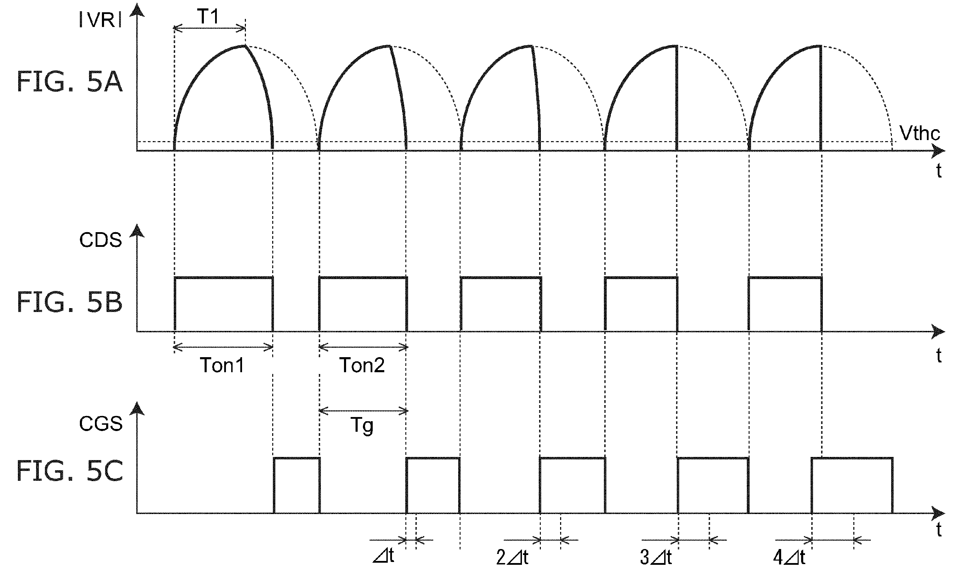

FIGS. 5A to 5C are graphs representing the operation of the control unit according to the embodiment.

FIGS. 5A to 5C represent an operation example performed when the control system of the dimmer 3 is the antiphase control system.

The abscissa of FIGS. 5A to 5C indicates time t. The ordinate of FIG. 5A indicates an absolute value of the detection voltage VR. The ordinate of FIG. 5B indicates the conduction angle detection signal CDS. The ordinate of FIG. 5C indicates the control signal CGS.

As shown in FIGS. 5A to 5C, the control unit 21 determines whether a conduction angle control for the alternating-current voltage VCT is the antiphase control system. When determining that the conduction angle control is the antiphase control system, first, as in the case of the phase control system, the control unit 21 determines whether an absolute value of the detection voltage VR is equal to or larger than the threshold voltage Vthc. The control unit 21 sets the conduction angle detection signal CDS and detects a conduction angle of the alternating-current voltage VCT from a ratio of the time Ton and the time Toff. The control unit 21 generates the control signal CTL of a duty ratio corresponding to the detected conduction angle and inputs the control signal CTL to the direct-current-voltage converting unit 34. Consequently, in the antiphase control system, as in the phase control system, it is possible to dim the illumination light source 16 according to the alternating-current voltage VCT.

In the antiphase control system, the time Ton is longer than time T1 of an actual conduction interval of the dimmer 3 because of the influence of charges accumulated in the filter capacitor 26. When the time Ton is longer than the time T1, for example, a duty ratio of the control signal CTL changes and a degree of dimming of the illumination light source 16 changes.

Therefore, the control unit 21 changes the current adjusting unit 23 to the first path state to operate to set the time Ton of Hi of the conduction angle detection signal CDS to the time T1.

That is, it is possible to extract charges accumulated in the filter capacitor 26 to the current adjusting unit 23 by changing the current adjusting unit 23 to the first path state and feeding a part of an electric current flowing through the power supply path 25 to the branch path 24. Consequently, the power supply circuit 14 can more surely detect a conduction angle of the alternating-current voltage VCT subjected to the antiphase control and more accurately perform dimming of the illumination light source 16.

The control unit 21 sets time Tg from the time when the conduction angle detection signal CDS is switched from Lo to Hi until the control signal CGS is switched from Lo to Hi next time to be earlier than time Ton1 of Hi of the conduction angle detection signal CDS detected last time by Δt (an adjustment time) and switches the control signal CGS from Lo to Hi. That is, the control unit 21 sets Tg=Ton1-Δt and switches the control signal CGS from Lo to Hi. Δt is set to, for example, time of about 1% to 2% with respect to time of one cycle of the alternating-current voltage VCT. When the alternating-current power supply 2 is a commercial power supply, Δt is, for example, about 150 µtsec.

The control unit 21 performs, on the basis of time Ton2 of Hi of the conduction angle detection signal CDS at the time when the control signal CGS is switched from Lo to Hi at time tg, control for reducing timing for switching the control signal CGS from Lo to Hi by Δt. That is, the control unit 21 sets Tg=Ton2-Δt and performs control for switching the control signal CGS from Lo to Hi.

For example, when the time Ton1 is longer than the time T1 of the actual conduction interval of the dimmer 3, the control unit 21 performs the control as explained above, whereby the time Ton2 becomes shorter than the time Ton1 by Δt. Therefore, by repeating the control for reducing the timing by Δt as explained above, it is possible to set the time Ton of Hi of the conduction angle detection signal CDS close to the time T1 of the actual conduction interval of the dimmer 3.

Electric power supplied in the section of the time T1 is electric power actually supplied from the dimmer 3. The capacity of the electric power supplied from the dimmer 3 is extremely large compared with the capacity of the charges accumulated in the filter capacitor 26. Therefore, even if the switching element 52 is turned on, the electric power actually supplied from the dimmer 3 is not completely extracted to the current adjusting unit 23. Therefore, even when the processing is repeated and the time Tg becomes shorter than the time T1, the time Ton does not become shorter than the time T1. In this case, the time Ton is substantially the same as the time T1.

The control unit 21 sets, on the basis of a conduction angle detected last time, timing for switching the current adjusting unit 23 from the second path state to the first path state earlier by a predetermined adjustment time. When the time Ton becomes equal to the time T1, the time Ton does not further decrease. Therefore, when control for switching the control signal CGS from Lo to Hi at timing earlier by Δt on the basis of the time Ton detected last time is continued, the time Ton becomes equal to the time T1 and a state in which the control signal CGS is always controlled from Lo to Hi at the timing earlier than the time T1 by Δ1 is a steady state.

In this way, the power supply circuit 14 can set the time Ton of Hi of the conduction angle detection signal CDS to be substantially the same as the time T1 of the actual conduction interval by the dimmer 3 and more surely detect a conduction angle of the alternating-current voltage VCT subjected to the antiphase control. The power supply circuit 14 can more accurately perform the dimming of the illumination light source 16.

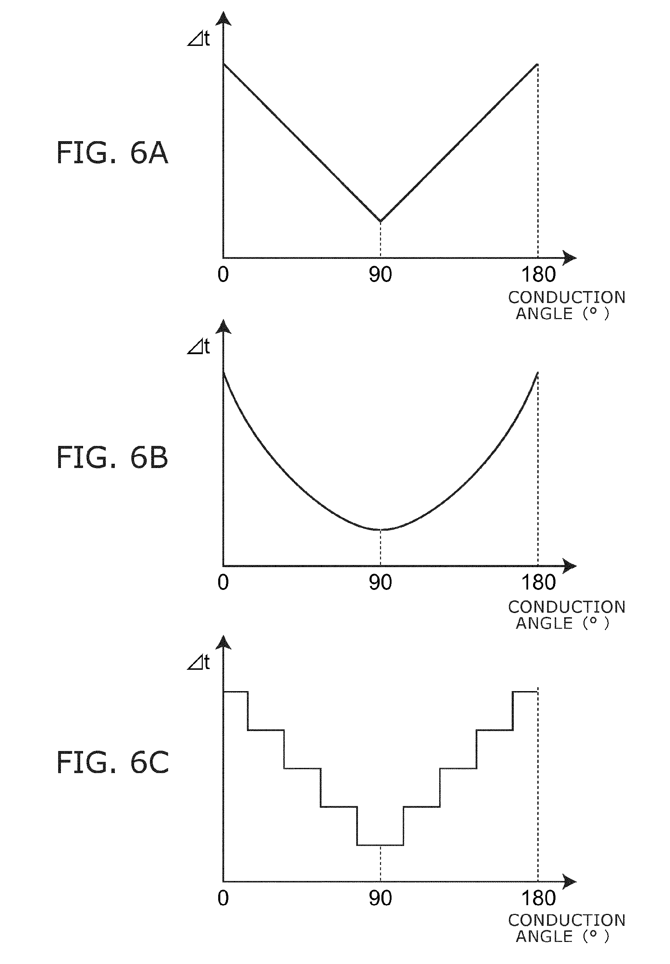

FIGS. 6A to 6C are graphs representing another operation of the control unit according to the embodiment.

FIGS. 6A to 6C represent profile data in which a conduction angle and time Δt are associated with each other. In the profile data, the time Δt is changed according to the conduction angle. In the profile data, as shown in FIGS. 6A and 6B, the time Δt may be continuously changed according to the conduction angle or, as shown in FIG. 6C, the time Δt may be changed stepwise according to the conduction angle.

When the time Δt is continuously changed, as shown in FIG. 6A, the time Δt may be linearly changed according to the conduction angle or, as shown in FIG. 6B, the time Δt may be changed in a quadratic function manner according to the conduction angle.

In the embodiment, the time Δt of a fixed value is used when the timing for switching the current adjusting unit 23 from the second path state to the first path state is set earlier by a predetermined time. However, the profile data shown in FIGS. 6A to 6C may be stored in advance and a value of the time Δt may be changed according to a detected conduction angle.

For example, when the control unit 21 determines that the control system of the dimmer 3 is the antiphase control system, after detecting a conduction angle of the alternating-current voltage VCT, the control unit 21 refers to the profile data. The control unit 21 reads out the time Δt corresponding to the detected conduction angle from the profile data. The control unit 21 carries out, using the read-out time Δt, the control for setting the timing for switching the current adjusting unit 23 from the second path state to the first path state earlier. Consequently, it is possible to change the time Δt according to the detected conduction angle.

In FIGS. 6A to 6C, the time Δt is set to be the shortest at a conduction angle of 90°. In the antiphase control at the conduction angle of 90°, detection accuracy of a conduction angle by the control unit 21 tends to be deteriorated because of, for example, the influence of noise. Therefore, as shown in FIGS. 6A to 6C, by setting the time Δt to be the shortest at the conduction angle of 90°, it is possible to more surely detect a conduction angle. Note that the profile data is not limited to the above and may be arbitrarily set.

The embodiment is explained above with reference to the specific examples. However, various modifications are possible.

For example, in the embodiment, the current adjusting unit 23 is used in the case of the antiphase control. However, for example, in the case of the phase control, the current adjusting unit 23 may be changed to the second path state in the conduction interval of the detected conduction angle and may be changed to the first path state in the interruption interval of the detected conduction angle.

In the embodiment, the lighting load 12 is described as the load. However, for example, the load may be an arbitrary load for which the conduction angle control is necessary such as a heater. In the embodiment, the power supply circuit 14 used for the luminaire 10 is described as the power supply circuit. However, the power supply circuit may be an arbitrary power supply circuit corresponding to a load for which the conduction angle control is necessary.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply circuit (14) comprising:
a power converting unit (20) configured to convert an alternating-current voltage into a direct-current voltage and supply the direct-current voltage to a load (12), the alternating-current voltage subjected to conduction angle control supplied via a power supply path (25);
a current adjusting unit (23) including a branch path (24) electrically connected to the power supply path (25) and capable of switching a first path state and a second path state, the first path state feeding a part of an electric current flowing through the power supply path (25) to the branch path (24), an electric current flowing to the branch path (24) in the second path state being smaller than the electric current in the first path state; and
a control unit (21) configured to detect a conduction angle of the alternating-current voltage, control the conversion of the direct-current voltage by the power converting unit (20) according to the detected conduction angle, and control the current adjusting unit (23) according to the detected conduction angle.

2. The circuit (14) according to claim 1, wherein the control unit (21) determines whether the conduction angle control for the alternating-current voltage is an antiphase control system and, when determining that the conduction angle control is the antiphase control system, changes the current adjusting unit (23) to the second path state in a conduction interval of the detected conduction angle, changes the current adjusting unit (23) to the first path state in an interruption interval of the detected conduction angle, and sets, on the basis of the detected conduction angle, timing for switching the current adjusting unit (23) from the second path state to the first path state earlier by a predetermined adjustment time.

3. The circuit (14) according to claim 2, wherein the control unit (21) changes the adjustment time according to the detected conduction angle.

4. The circuit (14) according to claim 3, wherein the control unit (21) has stored therein profile data in which the detected conduction angle and the adjustment time are associated with each other and reads out the adjustment time corresponding to the detected conduction angle from the profile data to thereby change the adjustment time.

5. The circuit (14) according to claim 4, wherein, in the profile data, the adjustment time is set to be shortest at a conduction angle of 90°.

6. The circuit (14) according to any one of claims 1 to 5, wherein
the load (12) is a lighting load (12) including an illumination light source (16),
the alternating-current voltage is supplied from a dimmer (3), and
the control unit (21) controls the power converting unit (20) and the current adjusting unit (23) according to the detected conduction angle to thereby dim the illumination light source (16) in synchronization with the conduction angle control of the dimmer (3).

7. The circuit (14) according to any one of claims 1 to 6, wherein the power converting unit (20) includes:
a rectifying circuit (30) configured to rectify the alternating-current voltage;
a smoothing capacitor (32) configured to smooth a voltage after the rectification and convert the voltage into a first direct-current voltage; and
a direct-current-voltage converting unit (34) configured to convert the first direct-current voltage into a second direct-current voltage, a voltage value of the second direct-current voltage is different from a voltage value of the first direct-current voltage.

8. The circuit (14) according to claim 7, wherein
a ground of the current adjusting unit (23) is provided in common with a ground on an input side of the direct-current voltage converting unit (34), and
a ground of the control unit (21) is provided in common with a ground on an output side of the direct-current voltage converting unit (34).

9. The circuit (14) according to any one of claims 7 and 8, wherein the rectifying circuit (30) full-wave rectifies the alternating-current voltage and converts the alternating-current voltage into a pulsating flow voltage.

10. The circuit (14) according to any one of claims 7 to 9, further comprising a power supply unit for control (22) including a wiring section (40) electrically connected to the power supply path (25) and a semiconductor device (48) configured to control an electric current flowing to the wiring section (40), the power supply unit for control (22) converting the alternating-current voltage input via the wiring section (40) and supplying the voltage to the control unit (21).

11. The circuit (14) according to claim 10, wherein
the semiconductor device (48) includes:
a first main electrode (48S);
a second main electrode (48D) set at a potential higher than a potential of the first main electrode (48S); and
a control electrode (48G) for switching a first state in which an electric current flows between the first main electrode (48S) and the second main electrode (48D) and a second state in which the electric current flowing between the first main electrode (48S) and the second main electrode (48D) is smaller than the electric current in the first state,
a voltage not smoothed by the smoothing capacitor (32) is applied to the second main electrode (48D), and
a voltage smoothed by the smoothing capacitor (32) is applied to the control electrode (48G).

12. The circuit (14) according to claim 11, wherein
a cathode of a Zener diode (47) is further electrically connected to the control electrode (48G), and
a voltage corresponding to a breakdown voltage of the Zener diode (47) is applied to the control electrode (48G).

13. The circuit (14) according to any one of claims 7 to 12, wherein
the direct-current-voltage converting unit (34) includes a switching element and converts the first direct-current voltage into the second direct-current voltage according to ON and OFF of the switching element, and
the control unit (21) inputs a control signal for specifying timing of ON and OFF of the switching element to the direct-current-voltage converting unit (34).

14. The circuit (14) according to any one of claims 1 to 13, further comprising a filter capacitor (26) electrically connected to the power supply path (25).

15. A luminaire (10) comprising:
a lighting load (12) including an illumination light source (16); and
the power supply circuit (14) according to any one of claims 1 to 14.
